# EUROPEAN PATENT APPLICATION

(11) **EP 4 235 288 A1**
(43) Date of publication of application: **30.08.2023**
(21) Application number: 21882808.5
(22) Date of filing: 19.10.2021
(51) Int. Cl.: G02F 1/15, G02F 1/155

(54) **ELECTROCHROMIC ELEMENT AND SPECTACLE LENS**

(30) Priority: 21.10.2020 JP 2020176814
(71) Applicant: Hoya Lens Thailand Ltd., Pathumthani 12130 (TH)
(72) Inventor: MIYAMOTO Sou, Tokyo 160-8347 (JP)
(74) Representative: Hoffmann Eitle
(86) International application number: PCT/JP2021/038551
(87) International publication number: WO 2022/085667

(57) **Abstract**

An object of the present invention is to provide an electrochromic element that suppresses reflection at an interface between an electrode layer and a substrate and does not impair a wearing feeling and the like, and a spectacle lens using the electrochromic element. An electrochromic element (10) of the present invention includes a substrate (1, 2) and an electrochromic film (3) disposed to be superimposed on the substrate, the electrochromic film includes an electrode layer (4, 5) and an electrochromic layer (6), and a luminous reflectance of an interface (11, 12) between the electrode layer and the substrate side is 1.0% or less. It is preferable that the electrode layer be a transparent electrode layer made of ITO, and a luminous reflectance of an interface between ITO and the substrate side be 1.0% or less.

## Description

### [Technical Field]

The present invention relates to an electrochromic element capable of reversibly controlling coloring and decoloring by electricity, and a spectacle lens using the electrochromic element.

### [Background Art]

An electrochromic element that reversibly causes an oxidation-reduction reaction by applying a voltage and uses an electrochromism phenomenon for reversibly changing color has been used, for example, as a spectacle lens. An electrochromic device is configured such that an electrochromic film having an electrode layer and an electrochromic layer is disposed on the surface of a substrate.

### [Citation List]

### [Patent Literature]

[PTL 1] Japanese Patent Application Publication No. 2017-111389
[PTL 2] Japanese Patent Application Publication No. 2013-101309

### [Summary of Invention]

### [Technical Problem]

As disclosed in PTL 1 and PTL 2, a transparent electrode layer made of ITO or the like is generally used as an electrode layer, but a refractive index of the transparent electrode layer is higher than refractive indexes of other material layers in an electrochromic film, and strong reflection occurs at an interface betw een the electrode layer and a substrate. For this reason, for example, using an electrochromic element with strong reflection as a spectacle lens results in a deterioration in a wearing feeling.

The present invention has been contrived to solve the above-described problems, and an object thereof is to provide an electrochromic element that suppresses reflection at an interface between an electrode layer and a substrate and does not impair a wearing feeling and the like, and a spectacle lens using the electrochromic element.

### [Solution to Problem]

An electrochromic device in the present invention includes a substrate and an electrochromic film disposed to be superimposed on the substrate, in which the electrochromic film includes an electrode layer and an electrochromic layer, and a luminous reflectance of an interface between the electrode layer and the substrate side is 1.0% or less.

In the present invention, it is preferable that the electrode layer be a transparent electrode layer made of ITO, and a luminous reflectance of an interface between ITO and the substrate side be 1.0% or less.

In the present invention, it is preferable that the electrochromic element further includes a layered structure of a second substrate, a second electrode layer, an oxidation layer, an electrolyte layer, a reduction layer, a first electrode layer, and a first substrate, in which each of a luminous reflectance of a first interface between the first electrode layer and a luminous reflectance of the first substrate and a second interface between the second electrode layer and the second substrate is 1.0% or less.

In the present invention, it is preferable that the first substrate be a polycarbonate substrate, the first electrode layer be a transparent electrode having a film thickness of 123.5 nm or more and 136.5 nm or less, and/or the second substrate be a polycarbonate substrate, and the second electrode layer be a transparent electrode having a film thickness of 120.5 nm or more and 138 nm or less.

In the present invention, it is preferable that the first substrate be a plastic substrate having a refractive index of 1.5, the first electrode layer be a transparent electrode having a film thickness of 125 nm or more and 135 nm or less, and/or the second substrate be a plastic substrate having a refractive index of 1.5, and the second electrode layer be a transparent electrode having a film thickness of 124.5 nm or more and 134 nm or less.

In the present invention, it is preferable that the first substrate be a plastic substrate having a refractive index of 1.7, and the first electrode layer be a transparent electrode having a film thickness of 125.5 nm or more and 134.5 nm or less, and/or the second substrate be a plastic substrate having a refractive index of 1.7, and the second electrode layer be a transparent electrode having a film thickness of 118 nm or more and 140 nm or less.

In the present invention, an antireflection layer may be provided between the substrate and the electrochromic film.

A spectacle lens according to the present invention is the electrochromic device described above, and the substrate is a lens substrate.

### [Advantageous Effects of Invention]

According to an electrochromic element of the present invention and a spectacle lens using the same, it is possible to control a luminous reflectance of an interface between an electrode layer and a substrate side to be 1.0% or less and obtain an excellent wearing feeling, feeling of use, visibility, or the like.

### [Brief Description of Drawings]

[Fig. 1]

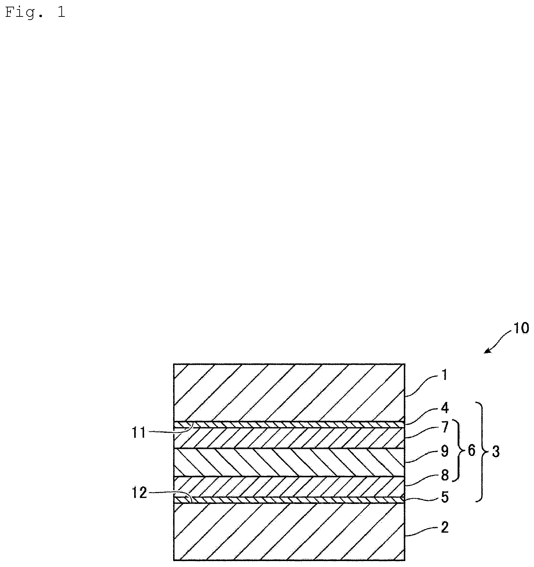

   Fig. 1 is a schematic cross-sectional view of an electrochromic element according to a first embodiment of the present invention.
[Fig. 2]

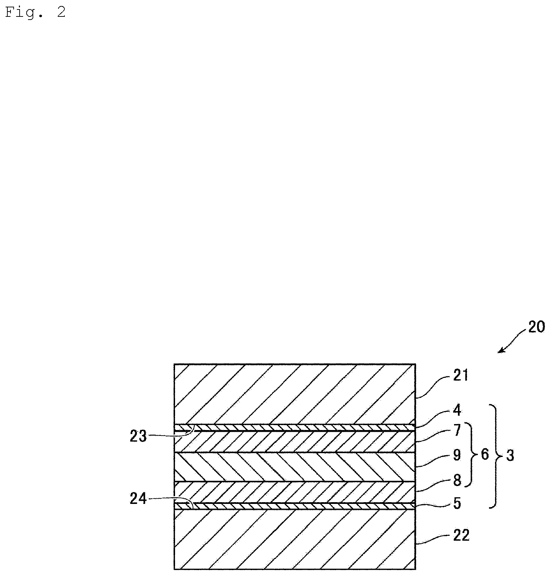

   Fig. 2 is a schematic cross-sectional view of an electrochromic element according to a second embodiment of the present invention.
[Fig. 3]

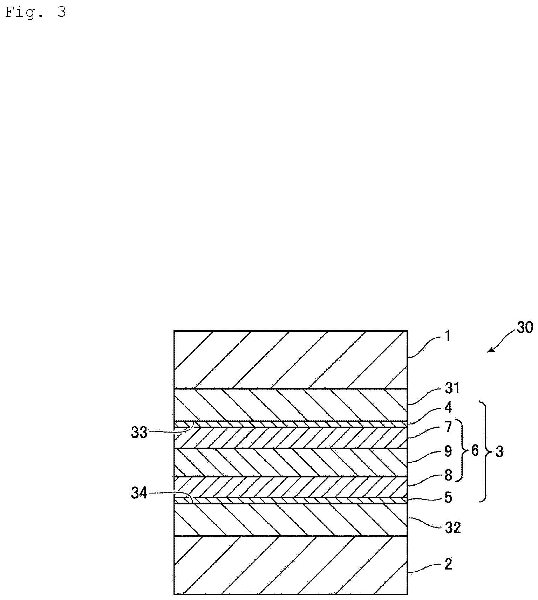

   Fig. 3 is a schematic cross-sectional view of an electrochromic element according to a third embodiment of the present invention.
[Fig. 4]

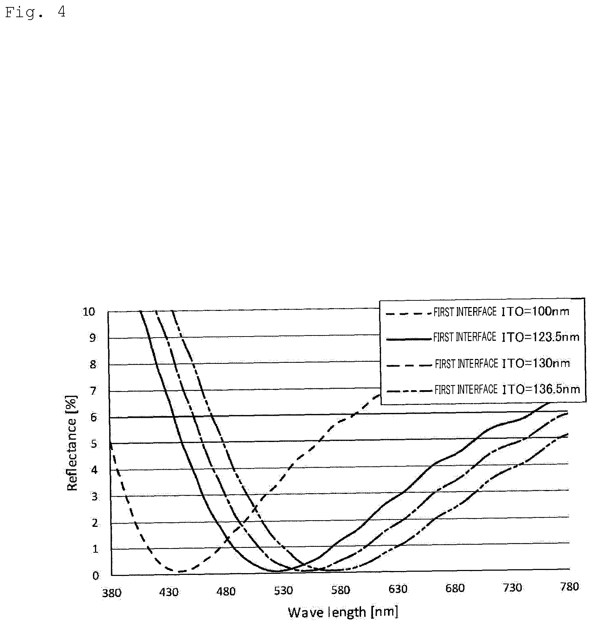

   Fig. 4 is a graph showing spectral reflection characteristics of a first interface when a film thickness of a first electrode layer is changed using the electrochromic element illustrated in Fig. 1 using a PC board.
[Fig. 5]

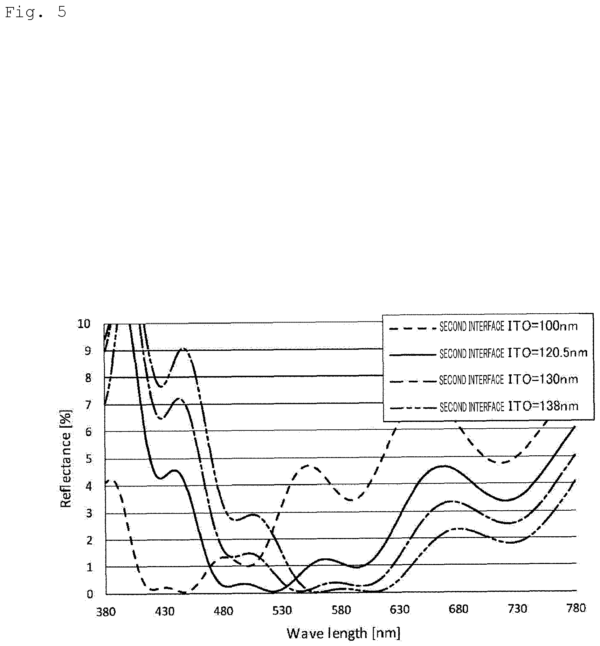

   Fig. 5 is a graph showing spectral reflectance characteristics of a second interface when a film thickness of a second electrode layer is changed using the electrochromic element illustrated in Fig. 1 using a PC board.
[Fig. 6]

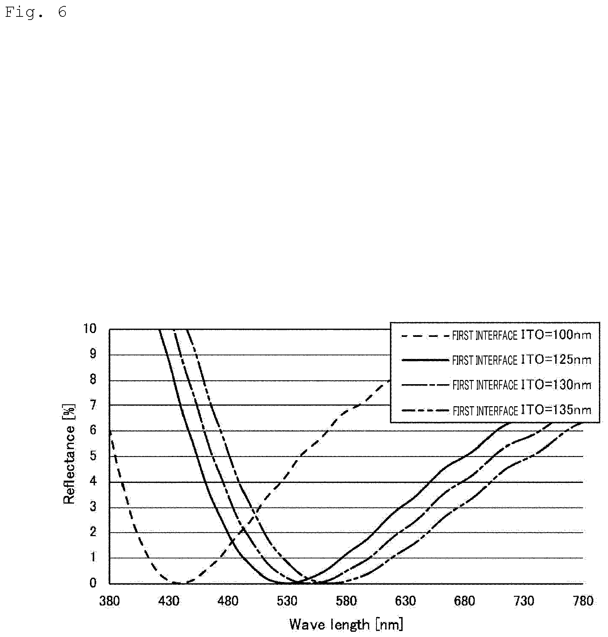

   Fig. 6 is a graph showing spectral reflection characteristics of a first interface when a film thickness of a first electrode layer is changed using the electrochromic element illustrated in Fig. 2 using a 1.5 substrate.
[Fig. 7]

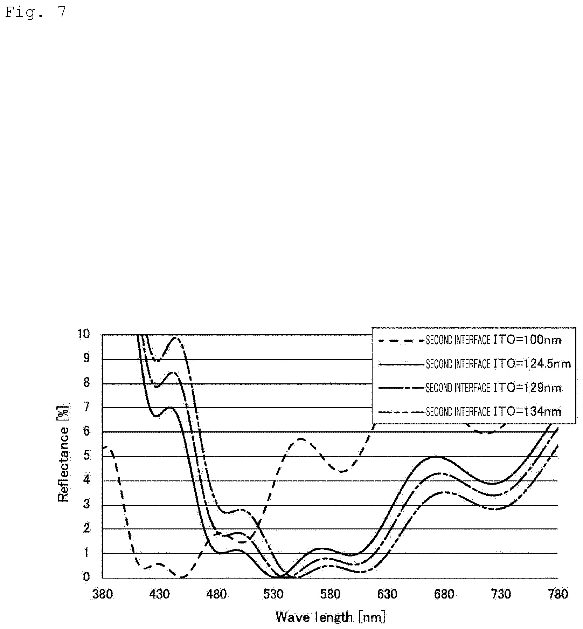

   Fig. 7 is a graph showing spectral reflection characteristics of a second interface when a film thickness of a second electrode layer is changed using the electrochromic element illustrated in Fig. 2 using a 1.5 substrate.
[Fig. 8]

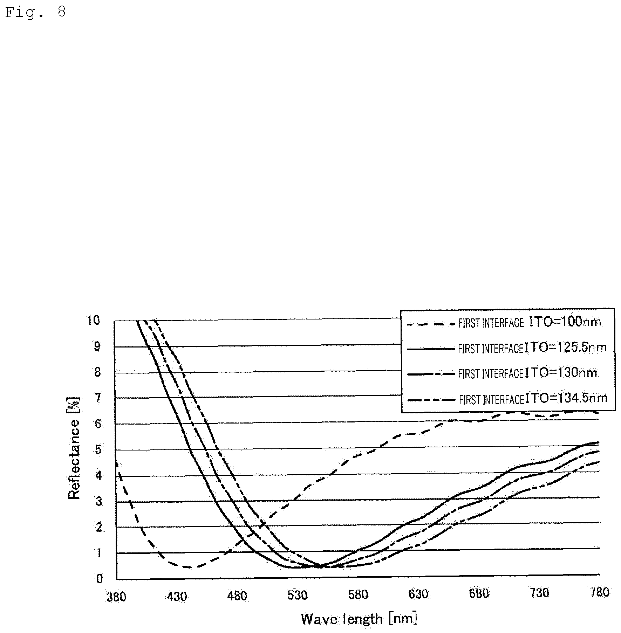

   Fig. 8 is a graph showing spectral reflection characteristics of a first interface when a film thickness of a first electrode layer is changed using the electrochromic element illustrated in Fig. 2 using a 1.7 substrate.
[Fig. 9]

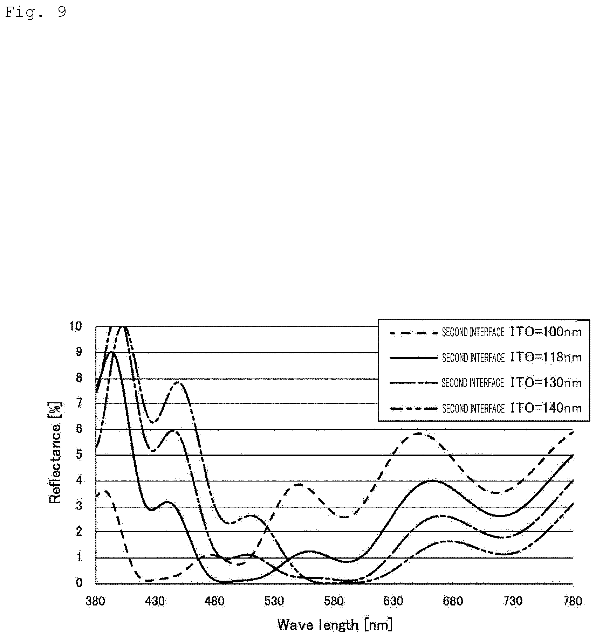

   Fig. 9 is a graph showing spectral reflection characteristics of a second interface when a film thickness of a second electrode layer is changed using the electrochromic element illustrated in Fig. 2 using a 1.7 substrate.
[Fig. 10]

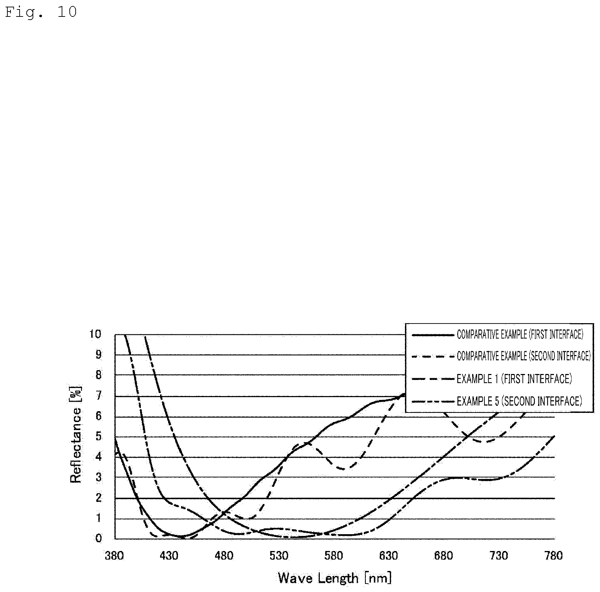

   Fig. 10 is a graph showing spectral reflection characteristics of a first interface and a second interface when a first electrode layer and a second electrode layer are fixed at 100 nm using the electrochromic element (example) illustrated in Fig. 3 having an antireflection layer and the electrochromic element (comparative example) having no antireflection layer.
[Fig. 11]

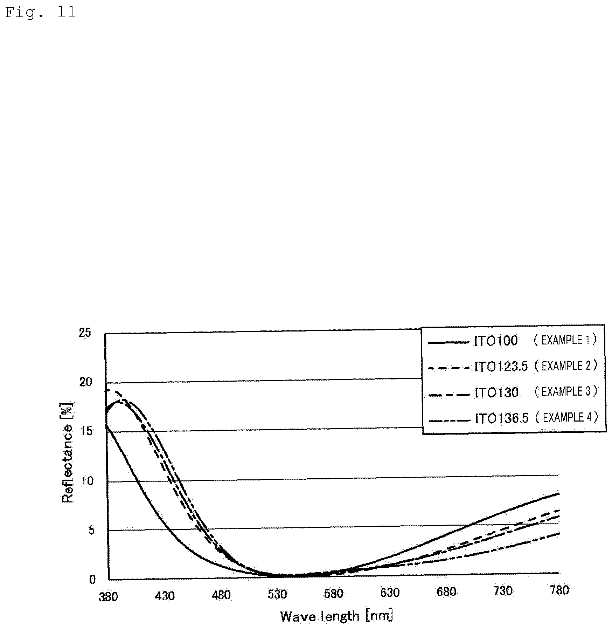

   Fig. 11 is a graph showing spectral reflection characteristics of the first interface when a film thickness of the first electrode layer is changed using the electrochromic element illustrated in Fig. 3 having the antireflection layer.
[Fig. 12]

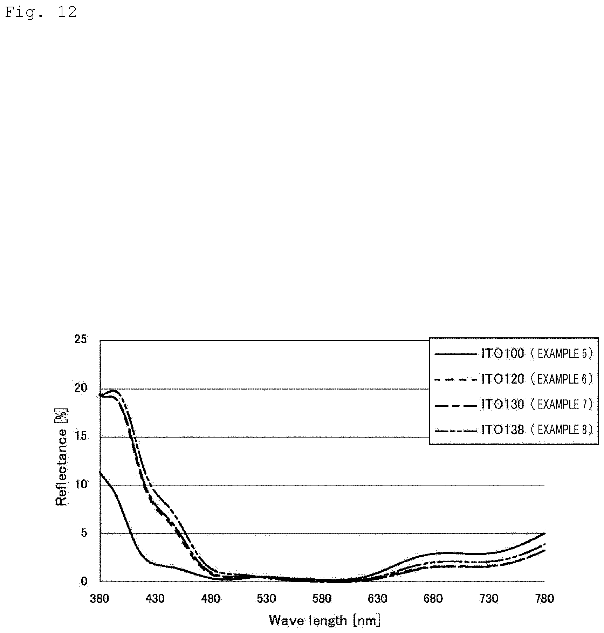

   Fig. 12 is a graph showing spectral reflection characteristics of the second interface when a film thickness of the second electrode layer is changed using the electrochromic element illustrated in Fig. 3 having the antireflection layer.

### [Description of Embodiments]

Hereinafter, a mode for carrying out the present invention (hereinafter simply referred to as "the present embodiment") will be described in detail.

### <Regarding problems of related art in electrochromic element and overview of present embodiment>

An electrochromic element is an element that utilizes an electrochromism phenomenon in which an oxidation-reduction reaction is reversibly caused by applying a voltage to both electrodes to reversibly change color. For example, an electrochromic element can be used as a spectacle lens and can function as sunglasses in a bright place and function as a clear lens in a dark place. It is possible to perform adjustment to an optimum brightness by a switch operation or automatically.

The electrochromic element includes a substrate and an electrochromic film disposed to be superimposed on the substrate. Although a layer structure of the electrochromic film is not limited, the electrochromic element includes at least an electrode layer and an electrochromic layer, in which the electrode layer is in contact with the substrate or is disposed on the surface of the substrate via a functional layer such as an antireflection layer.

Characteristics required for the electrode layer can include transparency, high transmittance, and an excellent conductivity. In order to satisfy having such characteristics, the electrode layer is a transparent electrode layer, and particularly, indium tin oxide (ITO) is preferably used.

Incidentally, it has been found that strong reflection occurs at an interface between the transparent electrode layer and the substrate side because a refractive index of the transparent electrode layer is higher than those of other material layers in the electrochromic film. Regarding the reflection, a luminous reflectance can be used as an index, and this luminous reflectance has been a high value of approximately 3% to 5% in the related art.

When the transparent electrode layer has such a high luminous reflectance, reflection is strong, for example, in a case where the electrochromic element is used as a spectacle lens, which results in a deterioration in a wearing feeling.

Consequently, as a result of intensive research, the inventor has found that a luminous reflectance can be made sufficiently lower than in the related art, for example, by adjusting the film thickness of an electrode layer. That is, in the electrochromic element of the present embodiment, the luminous reflectance of the interface between the electrode layer and the substrate can be controlled to 1.0% or less. Hereinafter, a layer structure of the electrochromic element according to the present embodiment will be specifically described.

### <Electrochromic element 10 in first embodiment>

Fig. 1 is a schematic cross-sectional view of an electrochromic element 10 according to a first embodiment of the present invention.

The electrochromic element 10 is configured to include a pair of a first substrate 1 and a second substrate 2, and an electrochromic film 3 sandwiched between the first substrate 1 and the second substrate 2.

The electrochromic film 3 includes a pair of a first electrode layer 4 and a second electrode layer 5, and an electrochromic layer 6 provided between the first electrode layer 4 and the second electrode layer 5. Furthermore, the electrochromic layer 6 includes a reduction layer 7 disposed on the first electrode layer 4 side, an oxidation layer 8 disposed on the second electrode layer 5 side, and an electrolyte layer 9 provided between the reduction layer 7 and the oxidation layer 8.

As illustrated in Fig. 1, the first electrode layer 4 is in contact with the first substrate 1, and an interface between the first electrode layer 4 and the first substrate 1 is referred to as a "first interface 11". In addition, the second electrode layer 5 is in contact with the second substrate 2, and an interface between the second electrode layer 5 and the second substrate 2 is referred to as a "second interface 12".

### [Features of electrochromic element 10 of first embodiment]

In the electrochromic element 10 illustrated in Fig. 1, each of the luminous reflectance of the first interface 11 and the second interface 12 is 1.0% or less. A luminous reflectance Rv is measured according to JIS T 7334:2011.

In the first embodiment, the substrates 1 and 2 are formed of a polycarbonate (PC) substrate. Although the thickness of the polycarbonate substrate is not limited, it is approximately several hundred um. In addition, the electrode layers 4 are 5 are formed of ITO. The refractive index of the polycarbonate substrate is approximately 1.55, and the refractive index of ITO is approximately 2.0. In addition, the refractive indexes of the reduction layer 7, the oxidation layer 8, and the electrolyte layer 9 are less than 2.0, specifically approximately 1.4 to 1.7. In this manner, the refractive index of ITO is the largest in the electrochromic film 3.

As shown in an experiment to be described later, when the film thickness of ITO is 100 nm, the luminous reflectances of both the first interface 11 and the second interface 12 are as high as approximately 3% to 5%.

Consequently, in the electrochromic element 10 of the first embodiment, the film thickness of ITO is set to be larger than 100 nm. Note that the film thicknesses of the electrode layers 4 and 5 are increased, and thus excellent electrical characteristics can be maintained.

In the first embodiment, the film thickness of ITO on the first electrode layer 4, that is, the reduction layer 7 side is preferably 123.5 nm or more and 136.5 nm or less. Thereby, the luminous reflectance of the first interface 11 can be suppressed to 1.0% or less.

Further, in the first embodiment, the film thickness of ITO on the second electrode layer 5, that is, the oxidation layer 8 side is preferably 120.5 nm or more and 138 nm or less. Thereby, the luminous reflectance of the second interface 12 can be suppressed to 1.0% or less.

### [Electrochromic layer 6]

Existing materials can be used for the reduction layer 7, the oxidation layer 8, and the electrolyte layer 9 that constitute the electrochromic layer 6.

The reduction layer 7 is a layer that develops color with a reduction reaction. An existing reduced electrochromic compound can be used for the reduction layer 7. Regardless of whether it is an organic material or an inorganic material, the material of the reduction layer 7 is not limited, but examples thereof may include azobenzene-based, anthraquinonebased, diarylethene-based, dihydroprene-based, dipyridine-based, styryl-based, styrylspiropyran-based, spirooxazine-based, spirothiopyran-based, thioindigo-based, tetrathiafulvalene-based, terephthalic acid-based, triphenylmethane-based, triphenylamine-based, naphthopyran-based, viologen-based, pyrazoline-based, phenazine-based, phenylenediamine-based, phenoxazine-based, phenothiazine-based, phthalocyanine-based, fluorane-based, fulgide-based, benzopyran-based, and metallocene-based materials, tungsten oxide, molybdenum oxide, iridium oxide, titanium oxide, and the like.

The oxidation layer 8 is a layer that develops color with an oxidation reaction. An existing oxidized electrochromic compound can be used for the oxidation layer 8. Regardless of whether it is an organic material or an inorganic material, the material of the oxidation layer 8 is not limited, but can be selected from among, for example, a composition containing a radically polymerizable compound including triarylamine, a Prussian blue-type complex, nickel oxide, iridium oxide, and the like.

The electrolyte layer 9 has electronic insulation and ionic conductivity, and is preferably transparent. The electrolyte layer 9 may be solid electrolyte, gel, liquid, or the like. The electrolyte layer 9 is preferably in the form of gel in order to maintain high ionic conductivity. Although it is not limited, inorganic ion salts such as alkali metal salt and alkaline earth metal salt, and existing electrolyte materials such as a quaternary ammonium salt and acid can be used.

Note that, for the film thickness of each material layer constituting the electrochromic layer 6, an existing value with which the electrochromism phenomenon is effectively exhibited can be selected. Specifically, the film thickness can be appropriately selected and used from among, for example, materials and film thicknesses described in US2019/184694, Japanese Patent No. 6623507, or Japanese Patent Application Publication No. 2018-132718. In addition, refractive indexes of the materials described in the above publications can be confirmed on the Chemical Book site (https://www.chemicalbook.com/ProductIndex_JP.aspx), and the like.

### <Electrochromic device 20 in second embodiment>

In an electrochromic element 20 illustrated in Fig. 2, substrates 21 and 22 made of materials different from those illustrated in Fig. 1 are disposed at both ends of the electrochromic film 3 illustrated in Fig. 1.

The substrates 21 and 22 are a glass or a plastic lens, and resins such as an acrylic resin, a polyethylene resin, a polyvinyl chloride resin, a polyester resin, an epoxy resin, a melamine resin, a phenol resin, a polyurethane resin, and a polyimide resin can be used, other than a polycarbonate resin.

For example, in the electrochromic element 20 illustrated in Fig. 2, a diethylene glycol bisallyl carbonate-based lens (refractive index = 1.5; HOYA Corporation, "HL") and a polysulfide-based plastic lens (refractive index = 1.7; HOYA Corporation, "EYRY") can be used for the substrates 21 and 22.

Also in the electrochromic element 20 illustrated in Fig. 2, each of a luminous reflectance of a first interface 23 between the first substrate 21 and the first electrode layer 4 and a luminous reflectance of a second interface 24 between the second substrate 22 and the second electrode layer 5 is 1.0% or less.

In the present embodiment, it is possible to perform control such that the luminous reflectance of each of the first interface 23 and the second interface 24 is 1.0% or less by adjusting the film thicknesses of the first electrode layer 4 and the second electrode layer 5.

For example, in a case where a lens base material having a refractive index of 1.5 ("HL" manufactured by HOYA Co., Ltd. described above) is used for each of the substrates 21 and 22, the film thickness of ITO (first electrode layer 4) on the reduction layer 7 side is preferably 125 nm or more and 135 nm or less. In addition, the thickness of ITO (second electrode layer 5) on the oxidation layer 8 side is preferably 124.5 nm or more and 134 nm or less. Thereby, each of the luminous reflectance of the first interface 23 and the second interface 24 can be suppressed to 1.0% or less.

Further, in a case where a lens base material having a refractive index of 1.7 ("EYRY" manufactured by HOYA Co., Ltd. described above) is used for each of the substrates 21 and 22, the film thickness of ITO (first electrode layer 4) on the reduction layer 7 side is preferably 125.5 nm or more and 134.5 nm or less. The film thickness of ITO (second electrode layer 5) on the oxidation layer 8 side is preferably 118 nm or more and 140 nm or less. Thereby, each of the luminous reflectance of the first interface 23 and the second interface 24 can be suppressed to 1.0% or less.

Here, the refractive index of each substrate applied to the electrochromic element is usually approximately 1.5 to 1.7. In a case where a substrate having a refractive index of approximately 1.5 to 1.7 is used based on the film thickness of each ITO described above with reference to Figs. 1 and 2, the film thickness of ITO on the reduction layer side is adjusted within a range of approximately 123.5 nm to 136.5 nm, preferably 125 nm to 135 nm, more preferably 125.5 nm to 134.5 nm, whereby the luminous reflectance of the first interface can be suppressed to 1.0% or less. Further, the film thickness of ITO on the oxidation layer is adjusted within a range of approximately 118 nm to 140 nm, preferably 120.5 nm to 138 nm, more preferably 124.5 nm to 134 nm, whereby the luminous reflectance of the second interface can be suppressed to 1.0% or less.

### <Electrochromic device 30 in third embodiment>

In an electrochromic element 30 illustrated in Fig. 3, substrates 1 and 2 are disposed at both ends of the electrochromic film 3 illustrated in Fig. 1 via antireflection layers (AR coats) 31 and 32. The antireflection layers 31 and 32 are in contact with both the electrochromic film 3 and the substrates 1 and 2. It is preferable that the antireflection layers 31 and 32 be an inorganic multilayer film in which a high refractive index layer and a low refractive index layer are alternately laminated. Although the material of the high refractive index layer is not limited, it may be, for example, ZrO₂, TiO₂, TaO₂, NbO₂, or the like, and ZrO₂ is particularly preferable. Although the material of the low refractive index layer is not limited, it is preferable that the low refractive index layer be formed of a single layer of SiO₂ or a mixed layer containing SiO₂ and be preferably single layers of SiO₂. Although not limited, the total number of high refractive index layers and low refractive index layers is approximately two to ten.

Also in the electrochromic element 30 illustrated in Fig. 3, similarly to the electrochromic elements 10 and 20 illustrated in Figs. 1 and 2, each of a first interface 33 between the first electrode layer 4 and the first substrate 1 side (equivalent to an interface between the first electrode layer 4 and the antireflection layer 31) and a second interface 34 between the second electrode layer 5 and the second substrate 2 side (equivalent to an interface between the second electrode layer 5 and the antireflection layer 32) has a luminous reflectance of 1.0% or less.

In Fig. 3, the luminous reflectance can be controlled to 1.0% or less by adjusting the film configuration of each of the antireflection layers 31 and 32 with respect to the film thickness of each of the electrode layers (ITO) 4 and 5. That is, the electrode layers 4 and 5 can be formed with a film thickness that appropriately exhibits an electrochromic phenomenon, and the film configurations of the antireflection layers 31 and 32 can be adjusted such that the luminous reflectance is 1.0% or less.

### <Application>

Although the application of the electrochromic element of the present embodiment is not limited, the electrochromic element can be preferably applied to photochromic spectacle lenses. In a spectacle lens, a first substrate and a second substrate are lens substrates, or a second substrate on an oxidation layer side is a lens substrate, and a first substrate 1 functions as a protection layer (hard coat layer). In the present embodiment, each of the luminous reflectance of the first interface and the second interface can be set to 1.0% or less, and when the electrochromic element is used as a spectacle lens, reflection can be effectively suppressed, and a wearing feeling can be enhanced.

The electrochromic element of the present embodiment may be applied to devices other than a spectacle lens. Examples thereof include an electrochromic dimmer, an anti-glare mirror, and the like. Since a luminous reflectance can be reduced to 1.0% or less even when the electrochromic element is applied for these uses, it is possible to obtain an excellent wearing feeling, and usability or visibility.

### <Others>

Although the same material is used for the first substrate on the reduction layer 7 side and the second substrate on the oxidation layer 8 side in each of the above-described embodiments, substrates made of different materials may be used. For example, a polycarbonate substrate can be used as the first substrate, and a lens substrate having a refractive index of 1.5 can be used as the second substrate. In such a case, a luminous reflectance of each interface can be suppressed to 1.0% or less by forming a film thickness of each ITO with respect to the materials of the substrates described above. Alternatively, the substrate may be disposed on only one side of the electrochromic element. That is, in such a case, the substrate is disposed on one side of the electrochromic element, but the electrode layer is exposed without the substrate on the other side.

In addition, the electrochromic film 3 may include at least one electrode layer and the electrochromic layer 6, and also in this case, a luminous reflectance of an interface between the substrate and the electrode layer is suppressed to 1.0% or less.

In addition, although ITO has been used as the electrode layer in the above-described embodiments, a transparent electrode layer other than ITO may be used. For example, fluorine-doped tin oxide (FTO), antimony doped tin oxide (ATO), or the like can be used as the transparent electrode layer. FTO and ATO have substantially the same refractive index as that of ITO, and the film thickness of ITO described in the above embodiments is applied to the film thickness of each electrode layer, whereby it is possible to perform control such that a luminous reflectance of each of the first interface and the second interface is set to 1.0% or less.

The electrochromic element in the present embodiment may have a flat shape or a curved shape. A luminous reflectance of 1.0% or less can be obtained regardless of the shape of the electrochromic element.

### [Examples]

Hereinafter, the present embodiment will be described in more detail with reference to an example and a comparative example.

### <Experiment using film configuration of electrochromic element 10 according to first embodiment>

A layered structure of the electrochromic element illustrated in Fig. 1 was configured such that the film thickness of the substrate was set to 300 µm, the film thickness of the reduction layer was set to 3 µm, the film thickness of the oxidation layer was set to 1.5 um, and the film thickness of the electrolyte layer was set to 50 um. The film thickness of the electrode layer was as shown in Tables 1 and 2.

A polycarbonate substrate (refractive index = 1.59) was used as the substrate, and ITO (refractive index = 2.1) was used as the electrode layer. Although it is not limited thereto, a viologen compound (refractive index = 1.45) was used for the reduction layer, a triarylamine compound (refractive index = 1.64) was used for the oxidation layer, and an organic gel-like material (a mixture of a plurality of organic salts and polymers, refractive index = 1.50) was used for the electrolyte layer.

The film thickness of ITO on the reduction layer side was changed to 100 nm, 123.5 nm, 130 nm, and 136.5 nm, and the film thickness of ITO on the oxidation layer side was changed to 100 nm, 120.5 nm, 130 nm, and 138 nm.

In the experiment, a spectral reflectance spectrum of an interface between each PC substrate and each ITO at each of wavelengths of 380 nm to 780 nm was measured using a spectral reflectometer USPM manufactured by Olympus Corporation. The experiment results are illustrated in Figs. 4 and 5. Fig. 4 illustrates spectral reflection characteristics of the first interface measured by variously changing the film thickness of ITO on the reduction layer side, and Fig. 5 illustrates spectral reflection characteristics of the second interface measured by variously changing the film thickness of ITO on the oxidation layer side.

As illustrated in Figs. 4 and 5, it can be understood that, when the film thickness of ITO is increased from 100 nm, a spectral reflectance spectrum shifts to a high wavelength side. That is, as illustrated in Figs. 4 and 5, when the film thickness of ITO is 100 nm, a wavelength at which a spectral reflectance is 0% is approximately 450 nm, and a spectral reflectance in a wavelength band of approximately 550 nm to 580 nm is as high as approximately 4%, but it can be understood that a peak at which a spectral reflectance is 0% can be shifted to a wavelength band of approximately 530 nm to 580 nm by increasing the film thickness of ITO.

Next, luminous reflectances of the first interface and the second interface were calculated according to JIS T 7334:2011 by using the spectral reflectances measured in Figs. 4 and 5. The experiment results are shown in Tables 1 and 2.

**[Table 1]**

| | LUMINOUS REFLECTANCE |
|---|---|
| TO 100 nm | 4.61 |
| TO 123.5nm | 0.99 |
| TO 130 nm | 0.78 |
| TO 136.5nm | 0.98 |

**[Table 2]**

| | LUMINOUS REFLECTANCE |
|---|---|
| TO 100 nm | 3.66 |
| TO 120.5nm | 0.96 |
| TO 130 nm | 0.66 |
| TO 138 nm | 0.96 |

Table 1 shows a relationship between the film thickness of ITO on the reduction layer side and the luminous reflectance of the first interface. Table 2 shows a relationship between the film thickness of ITO on the oxidation layer side and the luminous reflectance of the second interface.

As shown in Table 1, when the film thickness of ITO on the reduction layer side is 100 nm, the luminous reflectance of the first interface is 4.61, which is extremely high. On the other hand, it can be understood that, when the film thickness of ITO is set to 123.5 nm or more and 136.5 nm or less, the luminous reflectance of the first interface can be suppressed to 1.0% or less.

Further, as shown in Table 2, when the film thickness of ITO on the oxidation layer side is 100 nm, the luminous reflectance of the second interface is 3.66, which is extremely high. On the other hand, it can be understood that, when the film thickness of ITO is set to 120.5 nm or more and 138 nm or less, the luminous reflectance of the second interface can be suppressed to 1.0% or less.

### <Experiment using film configuration of electrochromic element 20 according to second embodiment>

A layered structure of the electrochromic element illustrated in Fig. 2 was configured such that the film thickness of the substrate was set to 300 µm, the film thickness of the reduction layer was set to 3 µm, the film thickness of the oxidation layer was set to 1.5 um, and the film thickness of the electrolyte layer was set to 50 um. The film thickness of the electrode layer was as shown in Tables 3 to 6. A "1.5 substrate" or a "1.7 substrate" was used as the substrate. The "1.5 substrate" is a diethylene glycol bisallyl carbonate lens (refractive index = 1.5; "HL" manufactured by HOYA Corporation). The "1.7 substrate" is a polysulfide plastic lens (refractive index = 1.7; "EYRY" manufactured by HOYA Corporation).

ITO (refractive index = 2.1) was used for the electrode layer. Although it is not limited, a viologen-based compound was used for the reduction layer, a triarylamine compound was used for the oxidation layer, and an organic gel-like material (a mixture of a plurality of organic salts and polymers) was used for the electrolyte layer.

In the experiment, the film thickness of ITO on the reduction layer side of the electrochromic element using the 1.5 substrate was changed to 100 nm, 125 nm, 130 nm, and 135 nm, and the film thickness of ITO on the oxidation layer side was changed to 100 nm, 124.5 nm, 129 nm, and 134 nm.

A spectral reflectance spectrum was measured by the method described above. The experiment results are illustrated in Figs. 6 and 7. Fig. 6 shows the spectral reflection characteristics of the first interface measured by varying the ITO film thickness on the reduction layer side, and Fig. 7 shows the second interface measured by varying the ITO film thickness on the oxidation layer side. It is the spectral reflection characteristic of the interface.

As illustrated in Figs. 6 and 7, when the film thickness of ITO is 100 nm, the spectral reflectance is 0% at a wavelength of approximately 450 nm, and the spectral reflectance is 4% or more in a wavelength band of 530 nm to 580 nm. On the other hand, it can be understood that when the film thickness of ITO is approximately 125 nm to 135 nm, the peak at which the spectral reflectance is 0% can be shifted to a wavelength band of approximately 530 nm to 580 nm.

Next, the luminous reflectances of the first interface and the second interface were calculated according to JIS T 7334:2011 using the spectral reflectances measured in Figs. 6 and 7. The results are shown in Tables 3 and 4.

Table 3 shows a relationship between the film thickness of ITO on the reduction layer side and the luminous reflectance of the first interface in the electrochromic element using the 1.5 substrate. Table 4 shows a relationship between the film thickness of ITO on the oxidation layer side and the luminous reflectance of the second interface in the electrochromic element using the 1.5 substrate.

**[Table 3]**

| | LUMINOUS REFLECTANCE |
|---|---|
| TO 100 nm | 5.44 |
| TO 125 nm | 0.99 |
| TO 130 nm | 0.84 |
| TO 135 nm | 0.99 |

**[Table 4]**

| | LUMINOUS REFLECTANCE |
|---|---|
| ITO 100 nm | 4.48 |
| ITO 124.5nm | 0.98 |
| ITO 129 nm | 0.87 |
| ITO 134 nm | 0.99 |

As shown in Table 3, when the film thickness of ITO on the reduction layer side is 100 nm, the luminous reflectance of the first interface is 5.44, which is extremely high. On the other hand, it can be understood that the luminous reflectance of the first interface can be suppressed to 1.0% or less by setting the film thickness of ITO to 125 nm or more and 135 nm or less.

Further, as shown in Table 4, when the film thickness of ITO on the oxidation layer side is 100 nm, the luminous reflectance of the second interface is 4.48, which is extremely high. On the other hand, it can be understood that the luminous reflectance of the second interface can be suppressed to 1.0% or less by setting the film thickness of ITO to 124.5 nm or more and 134 nm or less.

Next, in the experiment, the film thickness of ITO on the reduction layer side of the electrochromic element using the 1.7 substrate was changed to 100 nm, 125.5 nm, 130 nm, and 134.5 nm, and the film thickness of ITO on the oxidation layer side was changed to 100 nm, 118 nm, 130 nm, and 140 nm.

A spectral reflectance spectrum was measured by the method described above. The experiment results are illustrated in Figs. 8 and 9. Fig. 8 illustrates spectral reflection characteristics of the first interface measured by variously changing the film thickness of ITO on the reduction layer side, and Fig. 9 illustrates spectral reflection characteristics of the second interface measured by variously changing the film thickness of ITO on the oxidation layer side.

As illustrated in Figs. 8 and 9, when the film thickness of ITO is 100 nm, a spectral reflectance is approximately 0.5% or less at a wavelength of approximately 450 nm, and a spectral reflectance is approximately 3% or more in a wavelength band of 530 m to 580 nm. On the other hand, it can be understood that the lowest peak (0.5% or less) of the spectral reflectance can be shifted to a wavelength band of approximately 530 nm to 580 nm by setting the film thickness of ITO to approximately 120 nm to 140 nm.

Next, the luminous reflectances of the first interface and the second interface were calculated according to JIS T 7334:2011 by using the spectral reflectances measured in Figs. 8 and 9. The experiment results are shown in Tables 5 and 6.

Table 5 shows a relationship between the film thickness of ITO on the reduction layer side and the luminous reflectance of the first interface in the electrochromic element using the 1.7 substrate. Table 6 shows a relationship between the film thickness of ITO on the oxidation layer side and the luminous reflectance of the second interface in the electrochromic element using the 1.7 substrate.

**[Table 5]**

| | LUMINOUS REFLECTANCE |
|---|---|
| ITO 100 nm | 3.87 |
| ITO 125.5nm | 0.99 |
| ITO 130 nm | 0.92 |
| ITO 134.5nm | 0.99 |

**[Table 6]**

| | LUMINOUS REFLECTANCE |
|---|---|
| ITO 100 nm | 2.93 |
| ITO 118 nm | 1.00 |
| ITO 130 nm | 0.62 |
| ITO 140 nm | 0.98 |

As shown in Table 5, when the film thickness of ITO on the reduction layer side is 100 nm, the luminous reflectance of the first interface is 3.87, which is extremely high. On the other hand, it can be understood that the luminous reflectance of the first interface can be suppressed to 1.0% or less by setting the film thickness of ITO to 125.5 nm or more and 134.5 nm or less.

Further, as shown in Table 6, when the film thickness of ITO on the oxidation layer side is 100 nm, the luminous reflectance of the second interface is 2.93, which is extremely high. On the other hand, it can be understood that the luminous reflectance of the second interface can be suppressed to 1.0% or less by setting the film thickness of ITO to 118 nm or more and 140 nm or less.

### <Experiment using film configuration of electrochromic element 20 according to third embodiment>

A layered structure of the electrochromic element illustrated in Fig. 3 was laminated with film thicknesses shown in Table 7 below.

**[Table 7]**

| OVERALL CONFIGURATION | |
|---|---|
| | FILM THICKNESS[*µ*m] |
| SUBSTRATE(PC) | **300~** |
| FIRST AR LAYER | DESCRIBED IN TABLE 8 |
| ELECTRODE LAYER(ITO) | DESCRIBED IN TABLE 8 |
| REDUCTION LAYER | 3 |
| ELECTROLYTE LAYER | 50 |
| OXIDE LAYER | 1.5 |
| ELECTRODE LAYER(ITO) | DESCRIBED IN TABLE 9 |
| SECOND AR LAYER | DESCRIBED IN TABLE 9 |
| SUBSTRATE(PC) | 300~ |

Table 7 shows the overall film configuration of a third electrochromic element 30, and material configurations and film thicknesses of respective material layers constituting an AR layer, and film thicknesses of electrode layers are shown in Tables 8 and 9.

Note that a polycarbonate substrate was used for each substrate, and ITO was used for each electrode layer. Although it is not limited, a viologen-based compound was used for a reduction layer, a triarylamine compound was used for an oxidation layer, and an organic gel-like material (a mixture of a plurality of organic salts and polymers) was used for an electrolyte layer. Refractive indexes of the substrate, the electrode layer, the reduction layer, the oxidation layer, and the electrolyte layer are the same as in the first embodiment.

In the experiment, the film thickness of ITO on the reduction layer side was changed to 100 nm (Example 1), 123.5 nm (Example 2), 130 nm (Example 3), and 136.5 nm (Example 4), and the film thickness of ITO on the oxidation layer side was changed to 100 nm (Example 5), 120 nm (Example 6), 130 nm (Example 7), and 138 nm (Example 8).

Fig. 10 illustrates spectral reflection characteristics of a configuration having no antireflection layer (comparative example) and a configuration provided with an antireflection layer (Example 1 and Example 5) in an electrochromic element in which the film thickness of ITO on a reduction layer side and the film thickness of ITO on an oxidation layer side are fixed at 100 nm. As illustrated in Fig. 10, in Comparative Example 1, it can be understood that a wavelength at which a spectral reflectance is 0% is approximately 430 nm to 450 nm, and a spectral reflectance increases to 3% or more at wavelengths of 530 nm to 580 nm. On the other hand, in Examples 1 and 5, it can be understood that a wavelength at which a spectral reflectance is 0% is shifted to approximately 530 nm to 580 nm.

Fig. 11 illustrates spectral reflection characteristics of a first interface in Examples 1 to 4 which were measured by variously changing the film thickness of ITO on the reduction layer side, and Fig. 12 illustrates spectral reflectance characteristics of a second interface in Examples 5 to 8 which were measured by variously changing the film thickness of ITO on the oxidation layer side.

As illustrated in Figs. 11 and 12, in the electrochromic elements of Examples 1 to 8 having the antireflection layer, it can be understood that spectral reflectances at wavelengths of 530 nm to 580 can be suppressed to extremely low values regardless of the film thickness of ITO. That is, as can be seen from Figs. 11 and 12, a film configuration of the antireflection layer was appropriately adjusted in accordance with the film thickness of ITO so that spectral reflectances were set to approximately 0% over the wavelength band of 530 nm to 580 nm.

Next, luminous reflectances of the first interface and the second interface were calculated according to JIS T 7334:2011 by using the spectral reflectances measured in Figs. 11 and 12. The experiment results are shown in Tables 8 and 9.

**[Table 8]**

| | | COMPARATIVE EXAMPLE | EXAMPLE 1 | EXAMPLE 2 | EXAMPLE 3 | EXAMPLE 4 |
|---|---|---|---|---|---|---|
| Sub | ITO | 100nm | 1 00nm | 123.5nm | 130nm | 136.5nm |
| 1st | SiO₂ | - | - | - | 15nm | 58 nm |
| 2nd | ZrO₂ | - | 26nm | 8 nm | 2nm | 5 nm |
| 3rd | SiO₂ | - | 170nm | 190 nm | 185nm | 140 nm |
| Medium | Polycarbonate | - | - | - | - | - |
| LUMINOUS REFLECTANCE | | 4.61 | 0.59 | 0.58 | 0.62 | 0.75 |

**[Table 9]**

| | | COMPARATIVE EXAMPLE | EXAMPLE 5 | EXAMPLE 6 | EXAMPLE 7 | EXAMPLE 8 |
|---|---|---|---|---|---|---|
| Sub | ITO | 100nm | 100nm | 120nm | 130nm | 138nm |
| 1st | ZrO₂ | - | 29nm | 20nm | 10nm | - |
| 2nd | SiO₂ | - | 52nm | 60n m | 60nm | 67nm |
| 3rd | ZrO₂ | - | 9nm | 11nm | 11nm | 9nm |
| 4th | SiO₂ | - | 82nm | 82nm | 80nm | 83nm |
| Medium | Polycarbonate | - | - | - | - | - |
| LUMINOUS REFLECTANCE | | 3.66 | 0.45 | 0.41 | 0.43 | 0.42 |

As shown in Table 8, in the configuration having the antireflection layer on the reduction layer side, a luminous reflectance of the first interface could be suppressed to 1.0% or less, preferably 0.75% or less by appropriately adjusting the film configuration of the antireflection layer with respect to the film thickness of ITO. Although it is not limited, the film thickness of ITO can be adjusted in the range of 100 nm to 136.5 nm. In a case where the film thickness of ITO is set to be in the range of 100 nm to 136.5 nm, the film configuration of the antireflection layer is a layered structure of SiO₂ and ZrO₂, and the film thickness of SiO₂ in contact with the first substrate (PC) is made the largest in the antireflection layer. Specifically, the film thickness of SiO₂ is set to 140 nm or more and 200 m or less. In addition, the film thickness of ZrO₂ is smaller than that of SiO₂ and is set to approximately 2 nm to 30 m. The total number of antireflection layers is set to be two or three, and in the case of three layers, the film thickness of SiO₂ in contact with the first electrode layer (ITO) is set to approximately 10 nm to 60 nm.

Further, in the configuration having the antireflection layer on the oxidation layer side shown in Table 9, a luminous reflectance of the second interface could be suppressed to 1.0% or less, preferably 0.45% or less by adjusting the film configuration of the antireflection layer with respect to the film thickness of ITO. Although it is not limited, the film thickness of ITO can be adjusted in the range of 100 nm to 138 nm. In a case where the film thickness of ITO is set to be in the range of 100 nm to 138 nm, the film configuration of the antireflection layer is a layered structure of SiO₂ and ZrO₂, and the film thickness of SiO₂ in contact with the first substrate (PC) is made the largest in the antireflection layer. Specifically, the film thickness of SiO₂ is set to 50 nm or more and 100 m or less. The film thickness of ZrO₂ is smaller than that of SiO₂ and is set to approximately 5 nm to 30 m. The total number of antireflection layers is preferably three or four.

### [Industrial Applicability]

The electrochromic element of the present invention can suppress a luminous reflectance to 1.0% or less. Since reflection can be suppressed to a low level in this manner, using the electrochromic element as, for example, a lens for photochromic spectacles makes it possible to obtain excellent wearability.

This application is based on Japanese Patent Application No. 2020-176814 filed on October 21, 2020. All of this content is included here.

## Claims

1. An electrochromic element comprising:
a substrate; and
an electrochromic film disposed to be superimposed on the substrate,
wherein the electrochromic film includes an electrode layer and an electrochromic layer, and
a luminous reflectance of an interface between the electrode layer and the substrate side is 1.0% or less.

2. The electrochromic element according to claim 1, wherein the electrode layer is a transparent electrode layer made of ITO, and a luminous reflectance of an interface between ITO and the substrate side is 1.0% or less.

3. The electrochromic element according to claim 1 or 2, further comprising:
a layered structure of a second substrate, a second electrode layer, an oxidation layer, an electrolyte layer, a reduction layer, a first electrode layer, and a first substrate,
wherein each of a luminous reflectance of a first interface between the first electrode layer and the first substrate and a luminous reflectance of a second interface between the second electrode layer and the second substrate is 1.0% or less.

4. The electrochromic element according to claim 3, wherein the first substrate is a polycarbonate substrate, the first electrode layer is a transparent electrode having a film thickness of 123.5 nm or more and 136.5 nm or less, and/or
the second substrate is a polycarbonate substrate, and the second electrode layer is a transparent electrode having a film thickness of 120.5 nm or more and 138 nm or less.

5. The electrochromic element according to claim 3, wherein the first substrate is a plastic substrate having a refractive index of 1.5, the first electrode layer is a transparent electrode having a film thickness of 125 nm or more and 135 nm or less, and/or
the second substrate is a plastic substrate having a refractive index of 1.5, and the second electrode layer is a transparent electrode having a film thickness of 124.5 nm or more and 134 nm or less.

6. The electrochromic element according to claim 3, wherein the first substrate is a plastic substrate having a refractive index of 1.7, and the first electrode layer is a transparent electrode having a film thickness of 125.5 nm or more and 134.5 nm or less, and/or
the second substrate is a plastic substrate having a refractive index of 1.7, and the second electrode layer is a transparent electrode having a film thickness of 118 nm or more and 140 nm or less.

7. The electrochromic element according to any one of claims 1 to 6, wherein an antireflection layer is provided between the substrate and the electrochromic film.

8. A spectacle lens which is the electrochromic element according to any one of claims 1 to 7, wherein the substrate is a lens substrate.
